(19) Europäisches Patentamt
European Patent Office
Office européen des brevets

(11) EP 0 952 922 B1

(12) EUROPEAN PATENT SPECIFICATION

(45) Date of publication and mention of the grant of the patent:
**08.09.2004 Bulletin 2004/37**

(21) Application number: **98900486.6**

(22) Date of filing: **16.01.1998**

(51) Int Cl.[7]: **B32B 27/08**

(86) International application number:
**PCT/BE1998/000008**

(87) International publication number:
**WO 1998/031541 (23.07.1998 Gazette 1998/29)**

(54) **LAMINATING PROCESS USING A SILICONE CONTAINING ADHESIVE, AND LAMINATE MADE THEREBY**

LAMINIERUNGSVERFAHREN UNTER VERWENDUNG EINES SILIKON ENTHALTENDEN KLEBEMITTELS, UND DAS MIT DIESEM VERFAHREN ERZEUGTE LAMINAT

PROCEDE DE LAMINATION UTILISANT UN ADHESIF A BASE DE SILICONE, ET UN STRATIFIE PRODUIT PAR CE PROCEDE

(84) Designated Contracting States:
**BE DE ES FR GB IT**

(30) Priority: **17.01.1997 GB 9700903**

(43) Date of publication of application:
**03.11.1999 Bulletin 1999/44**

(73) Proprietors:
- **UCB Films PLC**
  **Watford, Herts WD1 1DJ (GB)**
- **DOW CORNING CORPORATION**
  **Midland, Michigan 48686-0994 (US)**
- **EG Technology Partners, LP**
  **Wilmington, MA 01887 (US)**

(72) Inventors:
- **POWER, Gary**
  **Silloth,Cumbria CA5 4DT (GB)**
- **BRANCH, Karen**
  **Carlisle,Cumbria CA2 5NT (GB)**
- **MERLIN, Patrick, J.**
  **B-7063 Neufvilles (BE)**
- **FUTTER, Dan**
  **B-1050 Bruxelles (BE)**
- **WYMAN, John, E.**
  **Westford, MA 01886 (US)**
- **RANGWALLA, Imtiaz**
  **North-Andover, MA 01845 (US)**

(74) Representative: **Best, Michael, Dr. et al**
**Lederer & Keller**
**Patentanwälte**
**Prinzregentenstrasse 16**
**80538 München (DE)**

(56) References cited:
**EP-A- 0 624 464** **US-A- 5 215 822**

- **H. Bennet et al.: 'Concise Chemical and Technical Dictionary', 3rd ed. (1974); Chemical Publishing Co., Inc., New York (US); p. 941**

Remarks:
The file contains technical information submitted after the application was filed and not included in this specification



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

### Field of the Invention

The invention relates to silicone containing laminates having barrier properties which are useful in packaging applications.

### Background of the Invention

It is well known that coatings containing silane compounds and itaconic acid improve the gas, oil, and flavor barrier performance of organic polymer film substrates. Moreover, the adhesion of the coating to the film surface, as well as the improved barrier characteristics provided by the silane coating, are greatly enhanced by exposing the coated film to electron beam radiation.

A particularly useful barrier composition is described in U.S. Patent No. 5,215,822, which teaches a methanol solution of a vinyl benzyl amine silane (Dow Coming Corp. Z-6032), itaconic acid, and water; coating this solution on a corona treated low density polyethylene film, drying, and then subjecting the coated film to electron beam radiation to graft the coating to the film surface and further improve the barrier properties of the silane coating. However, while this coating gives excellent gas barrier properties at low to moderate relative humidity values, the gas permeability increases drastically at very high relative humidity values.

The present inventors have surprisingly discovered that the combination of an aminofunctional silane, a multifunctional acrylate and an ethylenically unsaturated acid gives excellent gas barrier properties at low to moderate relative humidity values, as well as excellent gas barrier properties at very high relative humidity values.

While other patents teach the combination of a mono or multifunctional acrylate with an aminofunctional silane, none teaches the addition of the ethylenically unsaturated acid with an acrylate. For example, U.S. Patent No. 5,368,941 teaches a deformable, abrasion-resistant coating formulated from at least one multi-functional acrylate monomer, at least one aminofunctional silane, colloidal silica and at least one acrylate-terminated polyalkylene oxide, but does not teach the addition of an ethylenically unsaturated acid. The acrylate-terminated polyalkylene oxide helps prevent gelling of the coating composition during stripping and also imparts the composition with deformability, without sacrificing abrasion resistance.

Also, U.S. Patent No. 5,434,007 teaches a silane resin coated on a plastic film, where the silane resin is composed of a monofunctional acrylate and an aminofunctional silane. The composition does not utilize a free radical cure, nor does it incorporate the ethylenically unsaturated acid.

U.S. Patent Nos. 5,260,350 and 5,374,483 relate to a silicone coating composition which, when cured on a solid substrate either by ultraviolet or electron beam radiation, provides a transparent abrasion resistant coating firmly adhered thereon. The silicone coating is prepared by reacting at least one multifunctional acrylate monomer with an amino-organofunctional silane, mixing the modified silane with at least one acrylic monomer and thereafter adding colloidal silica. Again however, neither of these compositions teach the addition of an ethylenically unsaturated acid to achieve barrier properties.

JP (Kokai) publication 7-18221 published on January 20, 1995 teaches a surface treatment composition for gas barrier comprising an aminosilane and a compound having an aromatic ring or hydrogenated ring. The present invention is distinguishable, however, because it does not require the addition of cyclic compounds having an aromatic ring.

The present invention is distinguishable from the prior art because none teach the addition of a polymerizable additive to achieve gas barrier properties, nor do they teach a composition having both barrier and adhesive characteristics.

### Summary of the Invention

The invention comprises a laminate structure made by the following method:

coating at least one side of a substrate with a laminating adhesive,
bringing a coated side of said substrate into contact with a second substrate to form a multi-layer film, and
curing said multi-layer film by initiating a free-radical reaction after the second substrate is contacted with the first substrate, wherein said laminating adhesive is the reaction product of a multifunctional acrylate, an aminofunctional silane, and an ethylenically unsaturated acid, optionally dissolved in a solvent, wherein the multifunctional acrylate has a molecular weight of from 100 to 3000, and the aminofunctional silane has at least one molecule of the formula

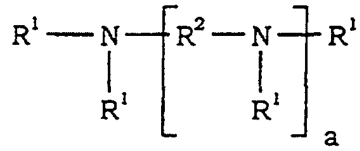

wherein

$$0 \leq \underline{a} \leq 4$$

$R^1$ is independently hydrogen. alkyl, substituted alkyl, aryl, substituted aryl, arylalkyl. acryl, methacryl, alkylaryl, $R^2$ - $SiR_m(OR)_{3-m}$, or an alkylene linking group having 2 to 12 carbon atoms connected to one or two nitrogen atoms, with the proviso that at least one $R^1$ is a hydrogen atom and at least one $R^1$ is an $R^2$ - $SiR_m(OR)_{3-m}$ group, where $\underline{m}$ is 0, 1 or 2, and R is independently a hydrogen or an alkyl group having from 1 to 6 carbon atoms;

$R^2$ is independently selected from the group consisting of:

linear or branched alkylene groups having from 1 to 12 carbon atoms; arylene groups having from 6 to 12 carbon atoms; and

linear or branched hydrocarbon groups having from 1 to 16 carbon atoms and at least one alcohol, alcohol ether, ester, amide, urea, thiourea or polyether group.

The invention is a laminate, which can be made from a variety of substrates. The laminate can then be used alone or with other substrates to give structural or barrier properties to packaging containers. The laminate adhesive can be further cured by drying in the presence of water prior to exposure to electron beam irradiation.

A composition according to the present invention may be employed to provide a barrier layer which improves resistance of the material to transmission of gases and aromas therethrough. For example, a 30 µm uncoated biaxilly oriented, corona treated polypropylene film is generally found to have a permeability to oxygen of 1500 ml/$m^2$/day as measured at ASTM D3985-81 measured at 80% relative humidity. With the present coatings, the oxygen transmission rate of the same film can be reduced to less than 250 ml/$m^2$/day as measured at 80% relative humidity. As used herein, the terminology "improved barrier" refers to a coating which can reduce oxygen transmission rate of the aforementioned uncoated polypropylene film from 1500 ml/$m^2$/day to 250 ml/$m^2$/day as measured at ASTM D3985-81 measured at 80% relative humidity.

Description of the Preferred Embodiments

While the invention is susceptible of embodiment in many different forms there is described herein in detail preferred and alternate embodiments of the invention.

Aminofunctional Silanes

The aminofunctional silanes are described generally by the formula:

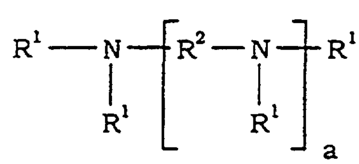

wherein

$$0 \leq \underline{a} \leq 4$$

$R^1$ is independently hydrogen, alkyl, substituted alkyl, aryl, substituted aryl, arylalkyl. acryl, methacryl, alkylaryl, $R^2$

- $SiR_m(OR)_{3-m}$, or an alkylene linking group having 2 to 12 carbon atoms connected to one or two nitrogen atoms, with the proviso that at least one $R^1$ is a hydrogen atom and at least one $R^1$ is an $R^2$ - $SiR_m(OR)_{3-m}$ group, where m is 0, 1 or 2, and R is independently a hydrogen or an alkyl group having from 1 to 6 carbon atoms;

$R^2$ is independently selected from the group consisting of:

linear or branched alkylene groups having from 1 to 12 carbon atoms;
arylene groups having from 6 to 12 carbon atoms; and
linear or branched hydrocarbon groups having from 1 to 16 carbon atoms and at least one alcohol, alcohol ether, ester, amide, urea, thiourea or polyether group.

The most preferred aminofunctional silanes useful for the present invention are N-(2-aminoethyl)-3-aminopropyltrimethoxy silane, and aminopropyltriethoxysilane, and blends thereof.

For the purposes of the present invention, the above mentioned amine functional silane group has the general formula

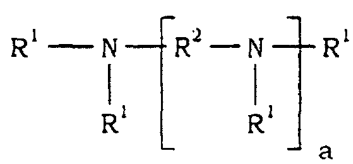

In the above formula, $R^1$ is a monovalent radical independently selected from the group consisting of hydrogen; acryl, methacryl, alkyl groups having 1 to 18 carbon atoms, such as methyl, ethyl, propyl, isobutyl, hexyl, octyl, decyl, dodecyl and octadecyl; substituted alkyl having 1 to 18 carbon atoms, such as 3-chloropropyl and 3,3,3-trifluoropropyl; aryl having 6 to 16 carbon atoms, such as phenyl and naphthyl; substituted aryl having 6 to 30 carbon atoms, such as chlorophenyl, chlorotolyl and dichloroxylyl; arylalkyl having 7 to 9 carbon atoms, such as benzyl, phenethyl and 3-phenylpropyl; and alkylaryl having 7 to 16 carbon atoms, such as tolyl, xylyl, ethylphenyl and propyltolyl. According to the invention, at least one $R^1$ group is hydrogen. Further, at least one $R^1$ is an $R^2$ - $SiR_m(OR)_{3-m}$ group, where R is an alkyl group having from 1 to 6 carbon atoms, m is 0, 1, or 2 and $R^2$ is defined below. The remaining $R^1$ groups on the aminosilane are preferably hydrogen or methyl.

$R^1$ can also be an alkylene linking group which links two different nitrogen atoms on the same molecule together, thus forming a cyclic aminosilane. The alkylene linking group can also be an arylene group which is connected to two different bonding sites on the same nitrogen atom. The alkylene linking group will have at least 2 carbon atoms and as many as 12 carbon atoms.

$R^2$ is an organic connecting group which provides a separation of at least one carbon atom between the nitrogen atoms or the nitrogen and silicon atoms. Thus, $R^2$ can be an alkylene group having at least 1 carbon atom or an arylene group having at least 6 carbon atoms. Preferably, $R^2$ is selected from the group consisting of ethylene, propylene, butylene, isobutylene, trimethylene, tetramethylene, and hexamethylene.

In addition, $R^2$ can contain polar groups such as, linear or branched hydrocarbon groups having from 1 to 16 carbon atoms and at least one alcohol, alcohol ether, ester, amide, urea, thiourea or polyether group. Specific examples of such groups include, those having the general formula $-CH_2CH(OH)(CH_2)_x-$, $-CH_2CH(OH)(CH_2)_x$ $-O-(CH_2)_y-$ , $-CH_2CH(CH_3)C(=O)-O-(CH_2)_y-$, $-CH_2CH_2C(=O)-0-(CH_2)_y-$, $-CH_2CH_2C(=O)-N(R)-(CH_2)_y-$, $-$ $C(=O)-N(R)-(CH_2)_y-$, $-C(=S)-N(R)-(CH_2)_y-$, or where x and y are each integers from 1 to 12. The hydroxyl and ester groups are highly polar, and it is believed the polar nature of the groups improve barrier properties.

Examples of specific amine-containing groups include such structures as $-CH_2CH_2CH_2NH_2$, $-CH_2CH_2CH_2N(H)CH_2CH_2NH_2$, $-CH_2CH_2CH_2N(H)CH_2CH_2N(H)CH_2CH_2NH_2$, $-CH_2CH_2CH_2CH_2NH_2$, $-CH_2CH_2CH_2CH_2CH_2NH_2$, $-CH_2CH_2CH_2N(H)Me$, $-CH_2CH_2CH_2N(H)CH_2CH_2NMe_2$, $-CH_2CH_2CH_2N(H)Et$, $-CH_2CH_2CH_2N(Et)H$, $-CH_2CH(CH_3)CH_2N(H)CH_2CH_2NH_2$ and $-CH_2CH(CH_3)CH_2NH_2$, inter alia, wherein Me and Et denote methyl and ethyl, respectively. A specific example of an amine containing cyclic group is piperazine.

As used herein the term "aminofunctional silane" can mean a single species of the formula described above, such as N-(2-aminoethyl)-3-aminopropyltrimethoxy silane, or it can mean mixtures or one or more species of aminofunctional silanes, such as N-(2-aminoethyl)-3-aminopropyltrimethoxy silane and aminopropyltriethoxysilane.

The above described aminofunctional silanes can be prepared by methods known to those skilled in the art, and which are amply described in the chemical literature.

Multifunctional Acrylates

The multifunctional acrylates of the present invention are defined as acrylates having, on average, greater than two functional acrylate groups per molecule and a molecular weight of from 100 to 3000. Multifunctional acrylates are preferred over monofunctional acrylates because monofunctional acrylates do not form flexible, crack free coatings as do the multifunctional acrylates. The majority of multifunctional acrylates commercially available can be used, but it is the smaller, more compact, i.e., proportionally more reactive acrylates that give the best results. The multifunctional acrylates are preferably selected from the group consisting of acrylated polyols with molecular weights of from 150 to 600; polyester urethane acrylates with molecular weights of from 1000 to 2000; polyether acrylates with molecular weights from 200 to 1500; polyurethane acrylates with molecular weights of from 400 to 2000; polyurea acrylates with molecular weights of from 400 to 2000; epoxy acrylates with molecular weights of from 300 to 1000; and mixtures of multifunctional acrylates thereof.

Most preferred acrylates are pentaerythritol tetraacrylate; an acid functional acrylate; polyester tetra acrylate; polyether tetra acrylate; an aliphatic urethane acrylate, Ebecryl 1290; ditrimethylolpropane tetra acrylate; an ethoxylated trimethylol propane triacrylate, Ebecryl 160. Other preferred acrylate include glycerol triacrylate, triacrylate ester of tris-[z-hydroxyethyl] isocyanurate, hexane dioldiacrylate, and dipentaerythritol hexacrylate. Ethoxylated and propoxylated versions of these acrylates may be used in this invention. These acrylates and methods of their production are well know in the art, and available commercially from such companies as UCB Radcure, (Brussels, Belgium) and Sartomer Corp. (Philadelphia, Pa.) As used herein, the term "mixtures of multifunctional acrylates" means mixtures of different acrylates of the same species, such as two different epoxy acrylates, or mixtures of different species of acrylates, such as epoxy acrylates and urethane acrylates.

Ethylenically Unsaturated Acid

In addition to the aminosilane and the multifunctional acrylate, a quantity of an ethylenically unsaturated acid is added to the composition. By "ethylenically unsaturated acid" it is meant any acid which has vinyl unsaturation. It is believed that the ethylenically unsaturated acid substantially improves the oxygen barrier performance of the composition because the carboxylic group forms an amine salt with amino groups of the aminosiiane, which contributes significantly to the coating's barrier properties. The ethylenically unsaturated acid is likely to be added in the amount of at least 5 to about 60 parts by weight of the composition, with about 30 to about 50 parts by weight being most preferred. The most preferred ethylenically unsaturated acids used in the present invention are dicarboxylic (i.e. have two carboxylic acid groups) and the most preferred is itaconic acid; however, other acids such as fumaric, maleic, citraconic, methacrylic, cinnamic, vinyl sulfonic acid, mesaconic acid, and itaconic acid monomethylester may also be used. The term "ethylenically unsaturated acid" as used herein includes mixtures of one or more of the aforementioned acids.

Solvents

The components of the present invention can optionally be reacted together in a solvent. In general, water, alcohols and blends thereof will serve as suitable solvents because the multifunctional acrylate and the ethylenically unsaturated acid are soluble therein. Typically, the solvent is a water/alcohol mixture where the alcohol is present in an amount of about 1-99%. In addition, the selected solvent must wet the substrate. Preferably, the solvent will be nontoxic, and will not extend the drying time of the coating beyond what is commercially acceptable. The amount of solvent can range from about 20 to about 99 parts by weight and is preferably from about 60 to about 95 parts by weight of the total composition. Preferred solvents are methanol, ethanol, n-propanol, isopropanol, butanol, and 1-methoxy-2-propanol (available as "Dowanol PM" from the Dow Chemical Co., Midland, MI).

Critical Ratios

During the reaction of aminosilanes with multifunctional acrylates, it is possible to utilize an excess of multifunctional acrylate over and above that required to react with the amino nitrogen atoms. In multifunctional acrylates, such as pentaerythritol tetraacrylate, the amine chains attached to the trimethoxysilyl groups may also have pendent acrylate groups which will undergo further polymerization under the influence of ionizing radiation. It is believed that the acrylate groups of the multifunctional acrylate and the amino groups of the aminofunctional silane undergo an addition reaction (Michael Addition) readily upon mixing of these two components. In addition, hydroxyl groups and solvents present may interact with alkoxy groups attached to the silicone atoms of the aminofunctional silane and cause a thickening of the composition at certain concentrations of the components in the solvent.

For example, one may employ an "amine rich" system, in which the total number of amine functional sites in

the composition due to the aminofunctional silane can be up to about six (6) times greater than the total number of acrylate sites in the composition due to the multifunctional acrylate, i.e., the ratio of amine functionality to the acrylate functionality can be from about 6:1 to about 1:1, with a ratio of about 4:1 to about 1:1 being, preferred, and with a ratio of 2:1 being most preferred. In the case where the aminofunctional silane is N-(2-aminoethyl)-3-aminopropyltrimethoxy silane or aminopropyltriethoxysilane, and the multifunctional acrylate is pentaerythritol tetraacrylate, the ratios in the amine rich system can be expressed in terms of molar ratios, with the preferred molar ratio of aminosilane to multifunctional acrylate being from about 6:1 to about 1:1, with a molar ratio of about 4:1 being most preferred.

Excellent results can also be achieved using an "acrylate rich" system, where the total number of reactive nitrogen sites in the composition from the aminofunctional silane is up to about six (6) times less than the total number of reactive acrylate sites in the composition due to the multifunctional acrylate, i.e., the ratio of amine functionality to acrylate functionality can be from about 1:1 to about 1:6, with a range of about 1:3 being preferred. In the case where the aminofunctional silane is N-(2-aminoethyl)-3-aminopropyitrimethoxy silane or aminopropyltriethoxysilane, and multifunctional acrylate is pentaerythritol tetraacrylate, the ratios of the acrylate rich system can be expressed in terms of molar ratios, with the preferred molar ratio of aminosilane to multifunctional acrylate being from about 1:1 to about 1:3, with a molar ratio of about 1:1.5 being most preferred.

Although the order of addition of the components to provide a composition according to the present invention is not critical, certain methods are preferable. For example, the aminofunctional silane and the acrylate component can be added together to form a Michael Adduct, before the addition of the ethylenically unsaturated acid. Also, the ethylenically unsaturated acid may be added at some point after the Michael Addition reaction begins, but before the aminosilane and/or the acrylate are completely consumed. "Quenching" the reaction by adding the ethylenically unsaturated acid can occur at any point in the reaction process, i.e., the acid may be added to the aminosilane before any acrylate is added, or after most of the acrylate is added. Practically, the reaction may be quenched at a predetermined point by simply adding part of the acrylate to the aminosilane, then adding the rest of the acrylate and the acid to this mixture. It is preferred that the quenching technique be used with the amine rich formulations of the invention.

The key factor in determining whether a particular formulation is acceptable as a laminate adhesive is whether the composition exhibits a minimum degree of tackiness. If the laminate adhesive is at least minimally tacky, then it will fall within the scope of the invention. The tackiness can be achieve by optimizing the ratios of the components as described above, or by adding a tackifier, such as multifuncitonal acyrlates.

Coat Weight

The coating can be applied in any desired amount, however, it is preferred that the coating be applied in an amount of from about 0.05 to about 20 g/m$^2$, the preferred coating weight being from about 0.5 to about 10 g/m$^2$. Coating weight can be determined by gravimetric comparison. The coating can be applied to the substrate by any conventional method, such as spray coating, roll coating, slot coating, meniscus coating, immersion coating, and direct, offset, and reverse gravure coating.

Substrates

The coating can be disposed on a wide variety of substrates, including, but not limited to polyolefins, such as oriented polypropylene (OPP), cast polypropylene, polyethylene and polyethylene copolymers. polystyrene. polyesters, such as polyester terephthalate (PET), or polyethylene naphthalate (PEN), polyolefin copolymers. such as ethylene vinyl acetate, ethylene acrylic acid and ethylene vinyl alcohol (EVOH), polyvinylalcohol and copolymers thereof, polyamides, such as nylon, and MXD6, polyimides, polyacrylonitrile, polyvinylchloride, polyvinyl dichloride, polyvinylidene chloride, and polyacrylates, ionomers. polysaccharides, such as regenerated cellulose, and silicone, such as rubbers or sealants, other natural or synthetic rubbers, glassine or clay coated paper, paper board or craft paper, and metallized polymer films and vapor deposited metal oxide coated polymer films, such as $AlO_x$, $SiO_x$, or $TiO_x$.

The aforesaid substrates are likely to be in the form of a film or sheet, though this is not obligatory. The substrate may be a copolymer, a laminate, a coextruded, a blend, a coating or a combination of any of the substrates listed above according to the compatibility of the materials with each other. In addition, the substrate may be in the form of a rigid container made from materials such as polyethylene, polypropylene, polystyrene, polyamides, PET, EVOH, or laminates containing such materials.

The aforesaid substrates may also be pretreated prior to coating by corona treatment, plasma treatment, acid treatments and flame treatments, all of which are known in the art.

In addition, the compositions of the present invention can be used in a wide variety of packaging containers, such as pouches, tubes, bottles, vials, bag-in-boxes, stand-up pouches, gable top cartons, thermoformed trays, brick-packs, boxes, cigarette packs and the like.

Of course, the present invention is not limited to just packaging applications, and may be used in any application wherein gas, or aroma barrier properties are desired, such as tires, buoyancy aides, inflatable devices generally, etc.

Any of the foregoing substrates may have primers applied thereon. The primers are applied to the substrates by methods known in the art such as spray coating, roll coating, slot coating, meniscus coating, immersion coating, and direct, offset and reverse gravure coating. Suitable primers include, but are not limited to carbodiimide, polyethylenimine, and silanes, such as N-(2-aminoethyl)-3-aminopropyltrimethoxy silane and aminopropyltriethoxysilane.

The most preferred laminate structures are (where Si represents the coating composition of this invention), OPP/Si/OPP, OPP/Si/PE, metOPP/Si/OPP, metOPP/Si/PET, metal oxide coated PET/Si/PE, metal oxide coated OPP/Si/PE, metal oxide coated PET/Si/PP, metal oxide coated OPP/Si/PP, and PE/Si/PE.

Curing

While the compositions of the present invention will form films at ambient conditions, optimum results are achieved by heating and/or free radical cures of the laminate structure. For example, the first substrate may be exposed to heat and/or moisture prior to lamination of the second substrate. Generally, the higher the temperature, the faster the coating will dry. The upper limit to the heating temperature is the temperature at which the substrate will undergo unacceptable distortion. Also, temperature will accelerate the rate of hydrolysis of silicon/alkoxy groups and also the rate of condensation of the silicon/alkoxy groups with silicon/hydroxy groups to form silicon-oxygen-silicon groups. The composition may be heated at room temperature or in an oven at temperatures up to about 140°C, with temperatures of from about 60°C to about 120°C being preferred and temperatures of about 90°C to about 110°C being most preferred. Heating time is temperature dependent and the coating will reach tack free time in one to 10 seconds. The heating step serves to evaporate the solvent and accelerate the condensation reaction between Si-OH groups and SiOH/SiOH groups.

The compositions may be further cured by initiating a free radical reaction after the second substrate is contacted with the first substrate. The most preferred method of initiating the free radical reaction is through the use of electron beam radiation, although ultraviolet or free radical generators such as azo compounds and peroxides may also be used.

The compositions are preferably cured by a free radical generator, such as ultraviolet, electron beam, or gamma radiation or chemical free radical generators such as azo compounds and peroxides. Low energy electron beam is the preferred method of curing because it is cheaper than gamma sources like Cobalt M-60. Its advantage over ultraviolet radiation as a cure system lies in its ability to generate free radicals without photoinitiators. It also imparts higher yields of crosslink density and chemical grafting of the coating to the substrate.

Electron beam accelerators of various types such as van de Graaf-type, resonance transformer-type, linear-type, dynamatron-type and high frequency-type can be used as a source of electron beam. Electron beam having energy of from about 5 to about 2000 KeV, preferably from about 50 to about 300 KeV discharged therefrom may be irradiated in a dose of from about 0.1 to about 10 Mrads (MR). Low electron beam voltages (less than 20 KeV) may be used if the substrate is treated in a vacuum. Commercially available sources of electron beam are Electro Curtain CB-150 available from Energy Sciences, Inc. (Wilmington, MA).

The compositions may also be ultraviolet light cured if one or more photoinitiators is added prior to curing. There are no special restrictions on the photoinitiators as long as they can generate radicals by the absorption of optical energy. Ultraviolet light sensitive photoinitiators or blends of initiators used in the UV cure of the present composition include 2-hydroxy-2-methyl-1-phenyl-propan-1-one (Darocure 1173). sold by EM Chemicals, and 2.2 Dimethoxy-2-phenyl-acetol-phenone (Urgacure 651). sold by Ciba-Geigy Corporation, Hawthorne, New York.

For purposes of this invention, it has been found that from about 0.05 to about 5 weight percent based on the total solids in the composition, of the photoinitiators described therein will cause the composition to cure.

In addition to radical polymerization and grafting to crosslink the coating after it has been applied to the film substrate, it is possible to further crosslink the amine silane materials utilizing acid catalyzed condensation reactions. In this reaction, a methoxylated active hydrogen compound, such as trimethylol phenol, or a mixture of formaldehyde with aldehydes, ketones, and other active hydrogen compounds react with amine salts, such as the itaconate salts of the amine silanes or derivatives to form alkylated amines.

Preferred Embodiments

To prepare the preferred embodiment of the invention, the acrylate component, preferably PETA, is dissolved in a solvent such as Dowanol PM. Itaconic acid, in an amount of 10.4 moles is then added to the equilibrated solution. The silane, preferably N-(2-amino ethyl) gamma aminopropyl trimethoxysilane is added to the above solution so the molar ratio of aminosilane to acrylate is about 4:1. This mixture is allowed to equilibrate for one hour at ambient conditions. The coating solution is applied to corona treated 30 µm thick "Rayopp" oriented polypropylene film available

from UCB Films Corporation. The coated film is placed immediately in an oven maintained at about 80-100°C and held there for 1-10 seconds. The oven is maintained at a relative humidity of about 50%. A second substrate, such as metalized oriented polypropylene film is place on the laminate adhesive, then the laminate structure is "cured" by an electron beam dose of 10 Megarads at 170 kV.

Optional Additives

Various optional additives can be added to the composition to improve various properties. These additives may be added as desired and in any amount as long as they do not degrade the performance of the barrier coatings as illustrated herein. Examples of additives include additional additives as earlier described, antiblock and slip aides such as stearamide oleamide or polar additives, such as epoxides, polyols, glycidols or polyamines, such as polyethylenimine, and other silanes such as N-(2-aminoethyl)-3-aminopropyltrimethoxy silane and aminopropyltriethoxysilane may also be added. Specifically excluded from the scope of the present invention are colloidal silicas and silanes or other molecules having four alkoxy or other hydrolyzable groups disposed on a single silicone or other organometalic atom, such as tetra ethoxy silane, and the like.Wetting agents, such as a polyethoxylated alkyl phenyol may also be added.

Examples

The experiments below illustrate the utility of a mixture of itaconic acid with the Michael addition product of various acrylate esters with N-(2-amino ethyl)gamma aminopropyl trimethoxysilane, hereinafter referred to as Z-6020, as a gas barrier coating on polypropylene film for use as a laminate adhesive. In experiments 1-3 the Z-6020, acrylate ester, and itaconic acid were utilized in a total solids content of 34 grams / 104 grams of solution. The solvent employed in all the experiments described below was 1-methoxy-2-propanol, available commercially from Dow Chemical Company (Midland. MI) as "Dowanol PM". The Z-6020 was obtained from Dow Corning Corporation (Midland. MI) and the itaconic acid from Aldrich Chemical Company (Milwaukee, WI). The coating solutions were all applied to corona treated 30 µm thick "Rayopp" oriented polypropylene film from UCB Films Corporation utilizing a #12 Myer rod. The coated film was placed immediately in a laboratory oven maintained at 80-100°C and held there for 10 minutes. Two open pans of water placed on the bottom shelf of the oven maintained a relative humidity of about 50%.

The oxygen permeability values for each film are given in units of ml/square meter per 24 hours, "dry" values measured at 0% relative humidity using a MOCON Oxtran Model 100 and "wet" values at 80-82% relative humidity utilizing a MOCON Model 2/20 MH. The MOCON instruments were obtained from Modem Controls Corporation. For comparison, the polypropylene base film had a permeability of about 1500 ml/square meter 24 hours. Solutions were coated with a RK coater and let 10 minutes to dry at room temperature; laminates are then prepared by applying a second film on the coated one with a roller. The resulting laminates are then cured by EB at 170kV. 10Mrads or by UV (dose = 11mJ/$cm^2$). Solutions were coated with a green K-bar that gives a coatweight of 4-4.5 gsm in the same conditions (30% solids in IPA). In Table 1 below, each the molar ratios of compositions and methods of preparation are shown.

Table 1

| | Preparation |
|---|---|
| Z6020/PETA/ITA (4:1:10.4). quenched | 13.52g ITA and 3.52g PETA were mixed in 60.48g IPA. 8.88g Z-6020 were then added. |
| Z-6020/PETA/ITA (4:1:10.4). semi-quenched | 3.52g PETA are dissolved in 60.48g IPA. 0.555g Z-6020 are then added. 13.52g ITA are added to the resulting solution. before the remaining Z-6020 (1.665g). |
| Z-6020/PETA/ITA (1:1.5:2.6) | 5.28g PETA are dissolved in 25.39g IPA. 2.22g Z-6020 are then added. The products are allowed to react for 20 minutes before adding 3.38g ITA. |
| A-1100/PETA/ITA (1:1.5:2.6) | 5.28g PETA are dissolved in 25.39g IPA. 1.8g A-1100 are then added. The products are allowed to react for 20 minutes before adding 3.38g ITA. |
| Z-6020/SR-415/ITA (1:1.5:2.6) | 17.64g SR-415 are dissolved in 25.39g IPA. 2.22g Z-6020 are then added. The products are allowed to react for 20 minutes before adding 3.38g ITA. |

Table 1 (continued)

| | Preparation |
|---|---|
| Z-6020/EB5129/ITA (1:1.5:2.6) | 2.5g EB-5129 are dissolved in 25.39g IPA. 2.22g Z-6020 are then added. The products are allowed to react for 20 minutes before adding 3.38g ITA. |
| Z-6020/PETA/acrylic acid, quenched | 7.49g acrylic acid and 3.52g PETA were mixed in 60.48g IPA. 8.88g Z-6020 were then added. |

These solutions were formed into laminate structures of various configurations, as described below in Table 2. In Table 1. OPP is corona treated 30 µm thick "Rayopp" oriented polypropylene film from UCB Films Corporation, metOPP is 30 µm metalized oriented polypropylene also available from UCB Films Corporation, PE is a 50 µm low density polyethylene film made by Dow Corning Corp. having a density of 0.92 and a 2 melt index. The OPET is 12 µm oriented polyethylene terephthalate, available as Ceramis CTXD from Lawson Martin and the OPPSiOx is 20 µm oriented polypropylene with SiOx, available as Ceramis CO. also from Lawson Martin.

Table 2

| Formulation | Substrate | Cure | Dry OTR (ml/ $m^2$day) | Wet OTR (ml/ $m^2$day) | Observations Adhesion* |
|---|---|---|---|---|---|
| Z-6020/PETA/ITA (4:1:10.4), quenched | OPP/OPP | EB | 9.0 | 188 | + |
| | OPP/OPP | UV | Not meas. | 190 | - |
| | OPP/metOPP | EB | 0.35 | 0.18 | + |
| | OPP/metOPP | UV | Not meas. | 38 | + |
| | OPP/PE | EB | 4.6 | 48 | + |
| | PE/PE | EB | 30 | 35 | + |
| | OPETSiOx/PE | EB | 0.05 | 0.03 | + |
| | OPPSiOx/OPP | EB | 0.2 | 0.82 | + |
| | OPP/OPET | EB | 10 | 45.6 | + |
| Z-6020/PETA/ITA 4:1:10.4, semi-quenched | OPP/OPP | EB | 3.5 | 201 | + |
| Z-6020/PETA/ITA 1:1.5:2.6 | OPP/OPP | UV | Not meas. | 50 | + |
| Z-6020/PETA/ITA 1:1.5:2.6 | OPP/OPP | EB | 70 | 247.3 | + |
| A-1100/PETA/ITA (1:1.5:2.6) | OPP/OPP | EB | 59.5 | 79.3 | + |
| Z-6020/EB5129/ITA (1:1.5:2.6) | OPP/OPP | EB | <1 | 222 | + |
| Z-6020/PETA/ acrylic acid, quenched | OPP/OPP | EB | Not meas. | 485.6 | + |

* "+" indicates excellent adhesion between laminates; "-" indicates poor adhesion.

## Claims

1. Method of manufacture of a laminate having barrier properties **characterized in that** it comprises the steps of:

    (I) coating at least one side of a substrate with a laminating adhesive,
    (II) bringing a coated side of said substrate into contact with a second substrate to form a multi-layer film, and
    (III) curing said multi-layer film by initiating a free-radical reaction after the second substrate is contacted with

the first substrate, wherein said laminating adhesive is the reaction product of a multifunctional acrylate, an aminofunctional silane. and an ethylenically unsaturated acid, optionally dissolved in a solvent, wherein the multifunctional acrylate has a molecular weight of from 100 to 3000, and the aminofunctional silane has at least one molecule of the formula

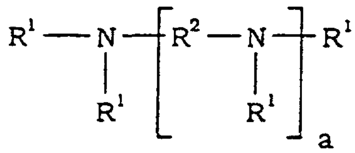

(IV)

wherein

$$0 \leq \underline{a} \leq 4$$

$R^1$ is independently hydrogen alkyl, substituted alkyl. aryl, substituted aryl. arylalkyl, acryl. methacryl, alkylaryl, $R^2$ - $SiR_m(OR)_{3-m}$, or $R^1$ is an alkylene linking group having 2 to 12 carbon atoms connected to one or two nitrogen atoms, with the proviso that at least one $R^1$ is a hydrogen atom and at least one $R^1$ is an $R^2$ - $SiR_m(OR)_{3-m}$ group, where $\underline{m}$ is 0, 1 or 2, and R is independently a hydrogen or an alkyl group having from 1 to 6 carbon atoms;

$R^2$ is independently selected from the group consisting of:

linear or branched alkylene groups having from 1 to 12 carbon atoms; arylene groups having from 6 to 12 carbon atoms; and
linear or branched hydrocarbon groups having from 1 to 16 carbon atoms and at least one alcohol, alcohol ether, ester, amide, urea. thiourea or polyether group.

**2.** Method according to claim 1, **characterized in that** the aminofunctional silane is N-(2-aminoethyl)-3-aminopropyltrimethoxysilane or aminopropyltriethoxy silane, or mixtures thereof.

**3.** Method according to claims 1 or 2, **characterized in that** there is a total amine functionality and a total acrylate functionality and the ratio of total amine functionality to total acrylate functionality is from 4:1 to 1:1.

**4.** Method according to claim 3, **characterized in that** the ratio of total amine functionality to total acrylate functionality is about 2: 1.

**5.** Method according to claims 1 or 2, **characterized in that** there is a total amine functionality and a total acrylate functionality and the ratio of total amine functionality to total acrylate functionality is from 1:1 to 1:6.

**6.** Method according to claim 5, **characterized in that** the ratio of total amine functionality to total acrylate functionality is about 1:3.

**7.** Method according to anyone of claims 1 to 6, **characterized in that** the multifunctional acrylate is selected from the group consisting of:

acrylated polyols with molecular weights from 150 to 600;
polyester acrylates with molecular weights from 1000 to 2000;
polyether acrylates with molecular weights from 200 to 1500;
polyester urethane acrylates with molecular weights from 400 to 2000;
polyurea acrylates with molecular weights from 400 to 2000;
epoxy acrylates with molecular weights from 300 to 1000; and
mixtures of multifunctional acrylates.

**8.** Method according to claim 7, **characterized in that** the multifunctional acrylate is selected from the group consisting of: pentaerythritol tetraacrylate, ditrimethylolpropane tetraacrylate, trimethylolpropane triacrylate, glycerol

triacrylate, triacrylate ester of tris-[2-hydroxy-ethyl] isocyanurate, hexane diol diacrylate, and dipenta erythritol hexacrylate, and ethoxylated and propoxylated derivatives of the above.

9. Method according to anyone of claims 1 to 8, **characterized in that** the reaction product is dissolved in a solvent and the solvent is a water/alcohol mixture where the alcohol present in an amount of 1-99% and the solvent constitutes 60-95 parts by weight of the total composition.

10. Method according to anyone of claims 1 to 9, **characterized in that** the molar ratio of the ethylenically unsaturated acid to the aminofunctional groups of the silane is from 1:1 or greater.

11. Method according to anyone of claims 1 to 10, **characterized in that** the ethylenically unsaturated acid is selected from the group consisting of itaconic acid, fumaric acid, maleic acid, citraconic acid, methacrylic acid, acrylic acid, sorbic acid, cinnamic acid, vinyl sulfonic acid, mesaconic acid, itaconic acid monomethylester, and mixtures thereof.

12. Method according to anyone of claims I to 10, **characterized in that** the ethylenically unsaturated acid is a dicarboxylic acid or a monoalkylester thereof.

13. Method according to anyone of claims 1 to 12, **characterized in that** the aminofunctional silane is N-(2-aminoethyl)-3-aminopropyitrimethoxysilane or aminopropyltriethoxy silane, the ethylenically unsaturated acid is itaconic acid, and the multifunctional acrylate is pentaerythritol tetraacrylate.

14. Method according to anyone of claims 1 to 13, **characterized in that** the laminating adhesive includes an additive.

15. Method according to claim 14, **characterized in that** said additive is selected from the group consisting of a silane, polyethylenimine, glycidyl methacrylate, glycidol, ethylene glycol diglycol ether, bisphenol A, polyethoxylated phenol.

16. Method according to anyone of claims 1 to 15, **characterized in that** the free radical reaction of step (III) is initiated by electron beam radiation, gamma radiation or ultraviolet radiation, optionally in the presence of photoinitiators, or **in that** the free radical reaction is initiated thermally in the presence of a free radical generator.

17. Method according to claim 16, **characterized in that** electron beam treatment of step (III) is performed at from 50 KeV to 10 MeV and greater than 2.5 Mrads.

18. Method according to claim 17, **characterized in that** said electron beam treatment is performed at 150 kV and at least 5 Mrads.

19. Method according to anyone of claims 1 to 18, **characterized in that** the coated substrate is exposed to moisture.

20. Method according to claim 19, **characterized in that** the coated substrate is heated in the presence of moisture.

21. Method according to anyone of claims 1 to 20, **characterized in that** the substrate is selected from the group consisting of polyolefins, including oriented polypropylene (OPP), cast polypropylene, polyethylene and polyethylene copolymer; polystyrene; polyesters, including polyethylene terephthalate (PET), or polyethylene naphthalate (PEN); polyolefin copolymers, including ethylene vinyl acetate, ethylene acrylic acid and ethylene vinyl alcohol (EVOH), polyvinylalcohol and copolymers thereof; polyamides, including nylon, and MXD6; polyimides; polyacrylonitrile; polyvinylchloride; polyvinyl dichloride; polyvinylidene chloride; polyacrylates; ionomers; polysaccharides, including regenerated cellulose; silicone, including rubbers or sealants; natural or synthetic rubbers; glassine or clay coated paper; paper board; craft paper; and metallized films and vapor deposited metal oxide coated polymer films, including $AlO_X$, $SiO_x$, or $TiO_x$.

22. Method according to anyone of claims 1 to 21, **characterized in that** the second substrates used to form the laminate are selected from the group consisting of polyolefins, including oriented polypropylene (OPP), cast polypropylene, polyethylene and polyethylene copolymer; polystyrene; polyesters, including polyethylene terephthalate (PET), or polyethylene naphthalate (PEN); polyolefin copolymers, including ethylene vinyl acetate, ethylene acrylic acid and ethylene vinyl alcohol (EVOH), polyvinylalcohol and copolymers thereof; polyamides, including nylon, and MXD6; polyimides; polyacrylonitrile; polyvinylchloride; polyvinyl dichloride; polyvinylidene chloride; polyacrylates; ionomers; polysaccharides, including regenerated cellulose; silicone, including rubbers or sealants; natural or synthetic rubbers; glassine or clay coated paper; paper board; craft paper; and metallized films and vapor deposited metal oxide coated polymer films, including $AlO_X$, $SiO_x$, or $TiO_x$.

**23.** Method according to anyone of claims 1 to 22, **characterized in that** at least one of the substrates is treated with a primer.

**24.** Method according to claim 23, **characterized in that** the primer or primers are independently selected from the group consisting of a silane, polyethylenimine, and carbodiimide.

**25.** Packaging container comprising a laminate film integral therewith, **characterized in that** the laminate formed by a method according to anyone of claims 1 to 24.

**26.** Packaging container according to claim 25, **characterized in that** the package is selected from the group consisting of a pouch, tube, vial, bottle, bag-in-box, stand-up pouch, gable top carton, thermoformed tray, brick-pack, box, and cigarette pack.

**Patentansprüche**

**1.** Verfahren zur Herstellung eines Laminats mit Sperreigenschaften **dadurch gekennzeichnet, dass** es die Stufen beinhaltet:

(I) dass mindestens eine Seite eines Substrats mit einem laminierenden Klebstoff beschichtet wird,
(II) eine beschichtete Seite des Substrats mit einem zweiten Substrat in Kontakt gebracht wird, um einen mehrschichtigen Film zu bilden und
(III)der mehrschichtige Film gehärtet wird, indem eine Radikalreaktion initiiert wird, nachdem das zweite Substrat mit dem ersten Substrat in Kontakt gebracht worden ist, wobei der laminierende Klebstoff das Reaktionsprodukt eines multifunktionellen Acrylats, eines aminofunktionellen Silans und einer ethylenisch ungesättigten Säure ist, gegebenenfalls gelöst in einem Lösungsmittel, wobei das multifunktionelle Acrylat ein Molekulargewicht von 100 bis 3000 hat und das aminofunktionelle Silan mindestens ein Molekül der Formel

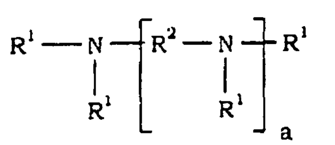

aufweist, worin

$$0 \leq a \leq 4$$

$R^1$ unabhängig Wasserstoff, Alkyl, substituiertes Alkyl, Aryl, substituiertes Aryl, Arylalkyl, Acryl, Methacryl, Alkylaryl, $R^2$-$SiR_m(OR)_{3-m}$ ist oder $R^1$ eine Alkylenverbindungsgruppe mit zwei bis zwölf Kohlenstoffatomen ist, die mit ein oder zwei Stickstoffatomen verbunden ist, mit dem Vorbehalt, dass mindestens ein Rest $R^1$ ein Wasserstoffatom ist und mindestens ein Rest $R^1$ eine $R^2$-$SiR_m(OR)_{3-m}$-Gruppe ist, wobei m 0, 1 oder 2 ist, und R unabhängig Wasserstoff oder eine Alkylgruppe mit 1 bis 6 Kohlenstoffatomen ist;

$R^2$ unabhängig ausgewählt ist aus der Gruppe bestehend aus linearen oder verzweigten Alkylengruppen mit 1 bis 12 Kohlenstoffatomen; Arylengruppen mit 6 bis 12 Kohlenstoffatomen und linearen oder verzweigten Kohlenwasserstoffgruppen mit 1 bis 16 Kohlenstoffatomen und mindestens einer Alkohol-, Alkoholether-, Ester-, Amid-, Harnstoff-, Thioharnstoff- oder Polyethergruppe.

**2.** Verfahren nach Anspruch 1, **dadurch gekennzeichnet, dass** das aminofunktionelle Silan N-(2-Aminoethyl)-3-aminopropyltrimethoxysilan oder Aminopropyltriethoxysilan oder eine Mischung davon ist.

**3.** Verfahren nach Anspruch 1 oder Anspruch 2, **dadurch gekennzeichnet, dass** die Gesamtaminfunktionalität und Gesamtacrylatfunktionalität und das Verhältnis von Gesamt-aminfunktionalität zu Gesamtacrylatfunktionalität 4:1 bis 1:1 ist.

**4.** Verfahren nach Anspruch 3, **dadurch gekennzeichnet, dass** das Verhältnis von Gesamtaminfunktionalität zu Gesamtacrylatfunktionalität etwa 2:1 ist.

**5.** Verfahren nach Anspruch 1 oder Anspruch 2, **dadurch gekennzeichnet, dass** es eine Gesamtaminfunktionalität und eine Gesamtacrylatfunktionalität gibt und das Verhältnis von Gesamtaminfunktionalität zu Gesamtacrylatfunktionalität 1:1 bis 1:6 ist.

**6.** verfahren nach Anspruch 5, **dadurch gekennzeichnet, dass** das Verhältnis von Gesamtaminfunktionalität zu Gesamtacrylatfunktionalität etwa 1:3 ist.

**7.** Verfahren nach einem der Ansprüche 1 bis 6, **dadurch gekennzeichnet, dass** das multifunktionelle Acrylat ausgewählt ist aus der Gruppe bestehend aus:

acrylierten Polyolen mit Molekulargewichten von 150 bis 600;
Polyesteracrylaten mit Molekulargewichten von 1000 bis 2000;
Polyetheracrylaten mit Molekulargewichten von 200 bis 1500;
Polyesterurethanacrylaten mit Molekulargewichten von 400 bis 2000;
Polyharnstoffacrylaten mit Molekulargewichten von 400 bis 2000;
Epoxyacrylaten mit Molekulargewichten von 300 bis 1000 und Mischungen von multifunktionellen Acrylaten.

**8.** Verfahren nach Anspruch 7, **dadurch gekennzeichnet, dass** das multifunktionelle Acrylat ausgewählt ist aus der Gruppe bestehend aus: Pentaerythrittetraacrylat, Ditrimethylolpropantetraacrylat, Trimethylolpropantriacrylat, Glycerintriacrylat, Triacrylatester von Tris-[2-hydroxy-ethyl]isocyanurat, Hexandioldiacrylat und Dipenta-erythrithexacrylat und ethoxylierten und propoxylierten Derivaten der obigen.

**9.** Verfahren nach einem der Ansprüche 1 bis 8, **dadurch gekennzeichnet, dass** das Reaktionsprodukt in einem Lösungsmittel gelöst wird und das Lösungsmittel eine Wasser/Alkoholmischung ist, wobei der Alkohol in einer Menge von 1 bis 99% vorhanden ist und das Lösungsmittel 60 bis 95 Gewichtsteile der Gesamtzusammensetzung bildet.

**10.** Verfahren nach einem der Ansprüche 1 bis 9, **dadurch gekennzeichnet, dass** das molare Verhältnis von ethylenisch ungesättigter Säure zu aminofunktionellen Gruppen des Silans 1:1 oder mehr ist.

**11.** Verfahren nach einem der Ansprüche 1 bis 10, **dadurch gekennzeichnet, dass** die ethylenisch ungesättigte Säure ausgewählt ist aus der Gruppe bestehend aus Itaconsäure, Fumarsäure, Maleinsäure, Citraconsäure, Methacrylsäure, Acrylsäure, Sorbinsäure, Zimtsäure, Vinylsulfonsäure, Mesaconsäure, Itaconsäuremonomethylester und Mischungen davon.

**12.** Verfahren nach einem der Ansprüche 1 bis 10, **dadurch gekennzeichnet, dass** die ethylenisch ungesättigte Säure eine Dicarbonsäure oder ein Monoalkylester davon ist.

**13.** verfahren nach einem der Ansprüche 1 bis 12, **dadurch gekennzeichnet, dass** das aminofunktionelle Silan N-(2-Aminoethyl)-3-aminopropyltrimethoxysilan oder Aminopropyltriethoxysilan ist, die ethylenisch ungesättigte Säure Itaconsäure ist und das multifunktionelle Acrylat Pentaerythrittetraacrylat ist.

**14.** Verfahren nach einem der Ansprüche 1 bis 13, **dadurch gekennzeichnet, dass** der laminierende Klebstoff ein Additiv enthält.

**15.** Verfahren nach Anspruch 14, **dadurch gekennzeichnet, dass** das Additiv ausgewählt ist aus der Gruppe bestehend aus einem Silan, Polyethylenimin, Glycidylmethacrylat, Glycidol, Ethylenglycoldiglycolether, Bisphenol A, polyethoxyliertem Phenol.

**16.** Verfahren nach einem der Ansprüche 1 bis 15, **dadurch gekennzeichnet, dass** die Radikalreaktion von Stufe (III) durch Elektronenstrahlung, Gammastrahlung oder Ultraviolettstrahlung gestartet wird, gegebenenfalls in Gegenwart von Photoinitiatoren oder dass die Radikalreaktion thermisch in Gegenwart eines Radikalgenerators gestartet wird.

**17.** Verfahren nach Anspruch 16, **dadurch gekennzeichnet, dass** die Elektronenstrahlbehandlung von Stufe (III) bei 50 KeV bis 10 MeV und mehr als 2,5 Mrads durchgeführt wird.

**18.** verfahren nach Anspruch 17, **dadurch gekennzeichnet, dass** die Elektronenstrahlbehandlung bei 150 kV und mindestens 5 Mrads durchgeführt wird.

**19.** Verfahren nach einem der Ansprüche 1 bis 18, **dadurch gekennzeichnet, dass** das beschichtete Substrat Feuchtigkeit ausgesetzt wird.

**20.** Verfahren nach Anspruch 19, **dadurch gekennzeichnet, dass** das beschichtete Substrat in Gegenwart von Feuchtigkeit erhitzt wird.

**21.** Verfahren nach einem der Ansprüche 1 bis 20, **dadurch gekennzeichnet, dass** das Substrat ausgewählt ist aus der Gruppe bestehend aus Polyolefinen, einschließlich orientiertem Polypropylen (OPP), gegossenem Polypropylen, Polyethylen und Polethylencopolymer; Polystyrol; Polyestern, einschließlich Polyethylenterephthalat (PET) oder Polyethylennaphthalat (PEN); Polyolefincopolymeren, einschließlich Ethylenvinylacetat, Ethylenacrylsäure und Ethylenvinylalkohol (EVOH), Polyvinylalkohol und Copolymeren davon; Polyamiden, einschließlich Nylon und MXD6; Polyimiden; Polyacrylnitril; Polvinylchlorid; Polyvinyldichlorid; Polyvinylidenchlorid; Polyacrylaten, Ionomeren; Polysacchariden, einschließlich regenerierter Cellulose; Silikon, einschließlich Kautschuken oder Dichtungsmitteln; natürlichen oder synthetischen Kautschuken; Pergamin oder Tonpapier; Pappe;Kraftpapier und metallisierten Filmen und durch Dampfabscheidung mit Metalloxid beschichteten Polymerfilmen, einschließlich $AlO_x$; $SiO_x$ oder $TiO_x$.

**22.** Verfahren nach einem der Ansprüche 1 bis 21, **dadurch gekennzeichnet, dass** die zweiten Substrate, die verwendet werden, um das Laminat zu bilden ausgewählt sind aus der Gruppe bestehend aus Polyolefinen, einschließlich orientiertem Polypropylen (OPP), gegossenem Polypropylen, Polyethylen und Polethylencopolymer; Polystyrol; Polyestern, einschließlich Polyethylenterephthalat (PET) oder Polyethylennaphthalat (PEN); Polyolefincopolymeren, einschließlich Ethylenvinylacetat, Ethylenacrylsäure und Ethylenvinylalkohol (EVOH), Polyvinylalkohol und Copolymeren davon; Polyamiden, einschließlich Nylon und MXD6; Polyimiden; Polyacrylnitril; Polyvinylchlorid; Polyvinyldichlorid; Polyvinylidenchlorid; Polyacrylaten, Ionomeren; Polysacchariden, einschließlich regenerierter Cellulose; Silikon, einschließlich Kautschuken oder Dichtungsmitteln; natürlichen oder synthetischen Kautschuken; Pergamin oder Tonpapier; Pappe; Kraftpapier und metallisierten Filmen und durch Dampfabscheidung mit Metalloxid beschichteten Polymerfilmen, einschließlich $AlO_x$; $SiO_x$ oder $TiO_x$.

**23.** Verfahren nach einem der Ansprüche 1 bis 22, **dadurch gekennzeichnet, dass** mindestens eines der Substrate mit einer Grundierung behandelt wurde.

**24.** Verfahren nach Anspruch 23, **dadurch gekennzeichnet, dass** die Grundierung(en) unabhängig ausgewählt ist/sind aus der Gruppe bestehend aus einem Silan, Polyethylenimin und Carbodiimid.

**25.** Verpackungsbehälter, der integral damit einen Laminatfilm aufweist, **dadurch gekennzeichnet, dass** das Laminat mit einem Verfahren nach einem der Ansprüche 1 bis 24 gebildet wurde.

**26.** Verpackungsbehälter nach Anspruch 25, **dadurch gekennzeichnet, dass** der Behälter ausgewählt ist aus der Gruppe bestehend aus Beuteln, Schläuchen, Flaschen, Fläschchen, Schachteln mit Innenbeutel, Standbeuteln, Giebelkartons, warmgeformten Schalen, Ziegelverpackungen, Schachteln und Zigarettenverpackungen.

## Revendications

**1.** Procédé de fabrication d'un stratifié ayant des propriétés barrière, **caractérisé en ce qu'**il comprend les étapes suivantes :

(I) l'application sur au moins une face d'un substrat d'un adhésif de stratification,
(II) la mise en contact d'une face enduite dudit substrat avec un second substrat pour former un film multicouche, et

(III) le durcissement dudit film multicouche en initiant une réaction radicalaire après que le second substrat est mis en contact avec le premier substrat, dans lequel ledit adhésif de stratification est le produit de réaction d'un acrylate multifonctionnel, d'un silane à fonction amino et d'un acide éthyléniquement insaturé, éventuellement dissous dans un solvant, dans lequel l'acrylate multifonctionnel a un poids moléculaire de 100 à 3000, et le silane à fonction amino contient au moins une molécule de la formule :

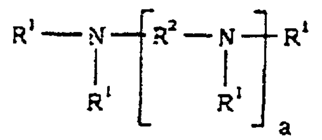

dans laquelle :

$$0 \leq \underline{a} \leq 4;$$

R' représente indépendamment de l'hydrogène, un groupe alkyle, alkyle substitué, aryle, aryle substitué, arylalkyle, acryle, méthacryle, alkylaryle, $R^2$ - $SiR_m(OR)_{3-m}$, ou bien $R^1$ représente un groupe de liaison d'alkylène comportant 2 à 12 atomes de carbone reliés à un ou deux atomes d'azote, à la condition qu'au moins un R' soit un atome d'hydrogène et au moins un $R^1$ soit un groupe $R^2$ - $SiR_m(OR)_{3-m}$, où $\underline{m}$ est égal à 0, 1 ou 2, et R représente indépendamment un hydrogène ou un groupe alkyle comportant de 1 à 6 atomes de carbone; $R^2$ est choisi indépendamment dans le groupe comprenant :

les groupes alkylène linaires ou ramifiés comportant de 1 à 12 atomes de carbone;
les groupes arylène comportant de 6 à 12 atomes de carbone; et
les groupes hydrocarbonés linéaires ou ramifiés comportant de 1 à 16 atomes de carbone et au moins un groupe alcool, éther d'alcool, ester, amide, urée, thiourée ou polyéther.

**2.** Procédé suivant la revendication 1, **caractérisé en ce que** le silane à fonction amino est du N-(2-aminoéthyl)-3-aminopropyltriméthoxysilane ou de l'aminopropyltriéthoxy silane, ou des mélanges de ceux-ci.

**3.** Procédé suivant l'une ou l'autre des revendications 1 et 2, **caractérisé en ce qu'**il y a une fonctionnalité amine totale et une fonctionnalité acrylate totale et le rapport de la fonctionnalité amine totale à la fonctionnalité acrylate totale est de 4/1 à 1/1.

**4.** Procédé suivant la revendication 3, **caractérisé en ce que** le rapport de la fonctionnalité amine totale à la fonctionnalité acrylate totale est d'environ 2/1.

**5.** Procédé suivant l'une ou l'autre des revendications 1 et 2, **caractérisé en ce qu'**il y a une fonctionnalité amine totale et une fonctionnalité acrylate totale et le rapport de la fonctionnalité amine totale à la fonctionnalité acrylate totale est de 1/1 à 1/6.

**6.** Procédé suivant la revendication 5, **caractérisé en ce que** le rapport de la fonctionnalité amine totale à la fonctionnalité acrylate totale est d'environ 1/3.

**7.** Procédé suivant l'une quelconque des revendications 1 à 6, **caractérisé en ce que** l'acrylate multifonctionnel est choisi dans le groupe comprenant :

les polyols acrylés avec des poids moléculaires de 150 à 600,
les acrylates de polyester avec des poids moléculaires de 1000 à 2000,
les acrylates de polyéther avec des poids moléculaires de 200 à 1500,
les uréthanne acrylates de polyester avec des poids moléculaires de 400 à 2000,
les acrylates de polyurée avec des poids moléculaires de 400 à 2000,
les époxy acrylates avec des poids moléculaires de 300 à 1000, et
les mélanges d'acrylates multifonctionnels.

8. Procédé suivant la revendication 7, **caractérisé en ce que** l'acrylate multifonctionnel est choisi dans le groupe comprenant le tétraacrylate de pentaérythritol, le tétraacrylate de ditriméthylolpropane, le triacrylate de triméthylolpropane, le triacrylate de glycérol, l'ester de triacrylate de tris-(2-hydroxyéthyl) isocyanurate, le diacrylate d'hexane diol et l'hexacrylate de dipentaérythritol, et les dérivés éthoxylés et propoxylés de ceux-ci.

9. Procédé suivant l'une quelconque des revendications 1 à 8, **caractérisé en ce que** le produit de réaction est dissous dans un solvant et le solvant est un mélange eau/alcool dans lequel l'alcool est présent en une quantité de 1-99% et le solvant constitue 60-95 parties en poids de la composition totale.

10. Procédé suivant l'une quelconque des revendications 1 à 9, **caractérisé en ce que** le rapport molaire de l'acide éthyléniquement insaturé aux groupes à fonction amino du silane est de 1/1 ou plus.

11. Procédé suivant l'une quelconque des revendications 1 à 10, **caractérisé en ce que** l'acide éthyléniquement insaturé est choisi dans le groupe comprenant l'acide itaconique, l'acide fumarique, l'acide maléique, l'acide citraconique, l'acide méthacrylique, l'acide acrylique, l'acide sorbique, l'acide cinnamique, l'acide vinyl sulfonique, l'acide mésaconique, l'ester monométhylique d'acide itaconique et leurs mélanges.

12. Procédé suivant l'une quelconque des revendications 1 à 10, **caractérisé en ce que** l'acide éthyléniquement insaturé est un acide dicarboxylique ou un ester monoalkylique de celui-ci.

13. Procédé suivant l'une quelconque des revendications 1 à 12, **caractérisé en ce que** le silane à fonction amino est le N-(2-aminoéthyl)-3-aminopropyltriméthoxysilane ou l'aminopropyltriéthoxy silane, l'acide éthyléniquement insaturé est l'acide itaconique et l'acrylate multifonctionnel est le tétraacrylate de pentaérythritol.

14. Procédé suivant l'une quelconque des revendications 1 à 13, **caractérisé en ce que** l'adhésif de stratification comprend un additif.

15. Procédé suivant la revendication 14, **caractérisé en ce que** l'additif précité est choisi dans le groupe comprenant un silane, la polyéthylénimine, le méthacrylate de glycidyle, le glycidol, l'éther diglycolique d'éthylène glycol, le bisphénol A, le phénol polyéthoxylé.

16. Procédé suivant l'une quelconque des revendications 1 à 15, **caractérisé en ce que** la réaction radicalaire de l'étape (III) est initiée par un rayonnement de faisceau électronique, un rayonnement gamma ou un rayonnement ultraviolet, éventuellement en présence de photo-initiateurs, ou **en ce que** la réaction radicalaire est initiée thermiquement en présence d'un générateur de radicaux libres.

17. Procédé suivant la revendication 16, **caractérisé en ce que** le traitement au faisceau électronique de l'étape (III) est réalisé à de 50 keV à 10 MeV et à plus de 2,5 Mrads.

18. Procédé suivant la revendication 17, **caractérisé en ce que** ledit traitement par faisceau électronique est réalisé à 150 keV et au moins 5 Mrads.

19. Procédé suivant l'une quelconque des revendications 1 à 18, **caractérisé en ce que** le substrat enduit est exposé à l'humidité.

20. Procédé suivant la revendication 19, **caractérisé en ce que** le substrat enduit est chauffé en présence d'humidité.

21. Procédé suivant l'une quelconque des revendications 1 à 20, **caractérisé en ce que** le substrat est choisi dans le groupe comprenant les polyoléfines, notamment le polypropylène orienté (PPO), le polypropylène coulé, le polyéthylène et les copolymères de polyéthylène, le polystyrène, les polyesters, notamment le polyéthylène téréphtalate (PET) et le polyéthylène naphtalate (PEN), les copolymères de polyoléfine, notamment l'éthylène-acétate de vinyle, l'éthylène-acide acrylique et l'éthylène-alcool vinylique (EVOH), l'alcool polyvinylique et ses copolymères, les polyamides, notamment le Nylon et le MXD6, les polyimides, le polyacrylonitrile, le chlorure de polyvinyle, le dichlorure de polyvinyle, le chlorure de polyvinylidène, les polyacrylates, les ionomères, les polysaccharides, notamment la cellulose régénérée, la silicone, notamment les caoutchoucs et agents d'étanchéité, les caoutchoucs naturels et synthétiques, le papier cristal et le papier couché à l'argile, le carton mince, le papier kraft et les films métallisés et films de polymère revêtus d'oxyde métallique déposé en phase vapeur, notamment $AlO_x$, $SiO_x$ et $TiO_x$.

**22.** Procédé suivant l'une quelconque des revendications 1 à 21, **caractérisé en ce que** les seconds substrats utilisés pour former le stratifié sont choisis dans le groupe comprenant les polyoléfines, notamment le polypropylène orienté (PPO), le polypropylène coulé, le polyéthylène et les copolymères de polyéthylène, le polystyrène, les polyesters, notamment le polyéthylène téréphtalate (PET) et le polyéthylène naphtalate (PEN), les copolymères de polyoléfine, notamment l'éthylène-acétate de vinyle, l'éthylène-acide acrylique et l'éthylène-alcool vinylique (EVOH), l'alcool polyvinylique et ses copolymères, les polyamides, notamment le Nylon et le MXD6, les polyimides, le polyacrylonitrile, le chlorure de polyvinyle, le dichlorure de polyvinyle, le chlorure de polyvinylidène, les polyacrylates, les ionomères, les polysaccharides, notamment la cellulose régénérée, la silicone, notamment les caoutchoucs et agents d'étanchéité, les caoutchoucs naturels et synthétiques, le papier cristal et le papier couché à l'argile, le carton mince, le papier kraft et les films métallisés et films de polymère revêtus d'oxyde métallique déposé en phase vapeur, notamment $AlO_x$, $SiO_x$ et $TiO_x$.

**23.** Procédé suivant l'une quelconque des revendications 1 à 22, **caractérisé en ce qu'**au moins un des substrats est traité par un primaire.

**24.** Procédé suivant la revendication 23, **caractérisé en ce que** les primaires ou le primaire sont choisis indépendamment dans le groupe comprenant un silane, la polyéthylénimine et le carbodiimide.

**25.** Récipient d'emballage comprenant un film stratifié faisant partie intégrante de celui-ci, **caractérisé en ce que** le stratifié est formé par un procédé suivant l'une quelconque des revendications 1 à 24.

**26.** Récipient d'emballage suivant la revendication 25, **caractérisé en ce que** l'emballage est choisi dans le groupe comprenant un sac, un tube, un flacon, une bouteille, un sachet-dans-boîte, un sachet tenant debout, un carton à extrémité en pignon, un plateau thermoformé, un emballage pour briques, une boîte et un paquet de cigarettes.